Europäisches Patentamt

(19) European Patent Office

Office européen des brevets

(11) Publication number : **0 357 054 B1**

(12) **EUROPEAN PATENT SPECIFICATION**

(45) Date of publication of patent specification :
22.03.95 Bulletin 95/12

(51) Int. Cl.⁶ : **H04N 9/04,** H04N 9/73,
H04N 1/46

(21) Application number : 89116037.6

(22) Date of filing : 30.08.89

(54) **Color image reading apparatus.**

(30) Priority : 31.08.88 JP 214879/88
31.08.88 JP 214880/88

(43) Date of publication of application :
07.03.90 Bulletin 90/10

(45) Publication of the grant of the patent :
22.03.95 Bulletin 95/12

(84) Designated Contracting States :
DE ES FR GB IT NL

(56) References cited :
FR-A- 2 538 660
GB-A- 2 155 273
PATENT ABSTRACTS OF JAPAN, vol. 10, no.
169 (P-468), 14th June 1986; & JP-A-61 021 524
IDEMPATENT ABSTRACTS OF JAPAN, vol. 6,
no. 238 (E-144)[1116], 26th November 1982; &
JP-A-57 138 280

(73) Proprietor : **CANON KABUSHIKI KAISHA**
**30-2, 3-chome, Shimomaruko,**
**Ohta-ku**
**Tokyo (JP)**

(72) Inventor : **Itagaki, Hiroshi**
**No. 102, Mezon Someno, 62-9**
**Okusawa 1-chome**
**Setagaya-ku Tokyo (JP)**
Inventor : **Matsuoka, Nobuo**
**17-70-103, Hiyoshihon-cho 4-chome**
**Kohoku-ku**
**Yokohama-shi Kanagawa-ken (JP)**

(74) Representative : **Tiedtke, Harro, Dipl.-Ing. et al**
**Patentanwaltsbüro**
**Tiedtke-Bühling-Kinne & Partner**
**Bavariaring 4**
**D-80336 München (DE)**

## Description

## BACKGROUND OF THE INVENTION

### Field of the Invention

The present invention relates to a color image reading apparatus for reading a color image by using an image sensor.

### Related Backgound Art

Hitherto, as an image sensor which is used to read out an image at a high speed, there has been known a type in which a stripe-shaped filter is provided for an image sensor of one line and color separation signals are time sharingly and dot sequentially read out.

The spectral sensitivity characteristic in a low wavelength range is worse than that in a high wavelength range due to the spectral sensitivity characteristic of the color filter which is used to obtain the color separation signals and the spectral sensitivity characteristic of the image sensor itself.

Therefore, an output signal of the image sensor when a reference image of a standard white plate or the like is read does not become an analog video signal which is dot sequentially color balanced. Therefore, to assure a sufficient dynamic range (S/N ratio) of the color separation signals, in an analog video signal processing circuit, the levels of the color separation signals need to be matched. For this purpose, hitherto, in consideration of easiness of a circuit construction and stabilization of sampling points when executing A/D conversion, the dot sequential color signals are respectively separated by a sample and hold circuit (hereinafter, referred to as an S/H circuit) and transformed to simultaneous color signals and subjected to signal processes such as amplification and the like. The levels of the color separation signals when the standard white plate was read are matched, thereby adjusting the color balance.

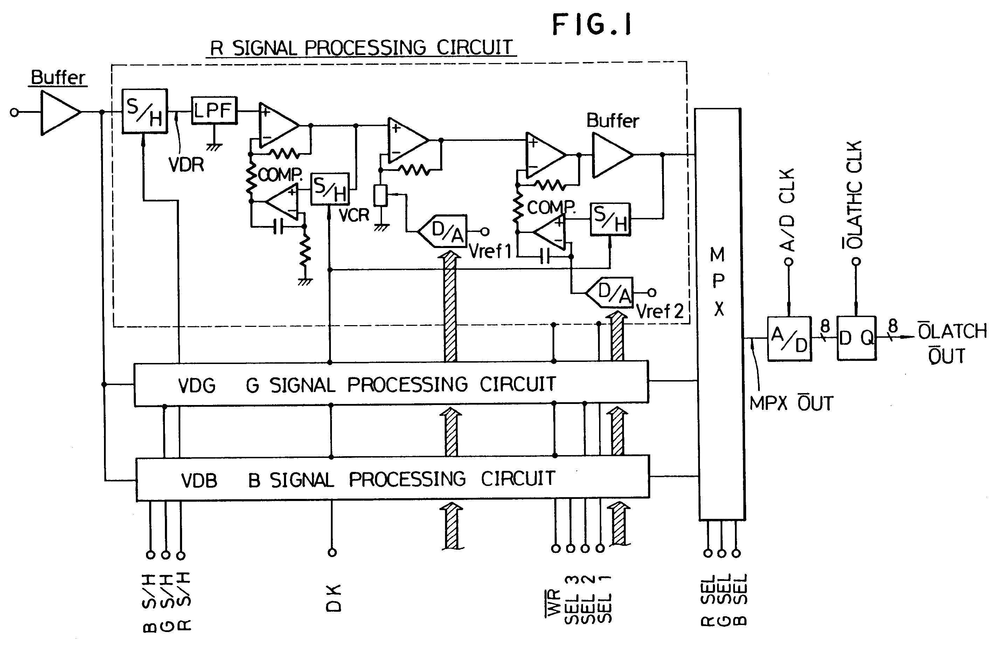

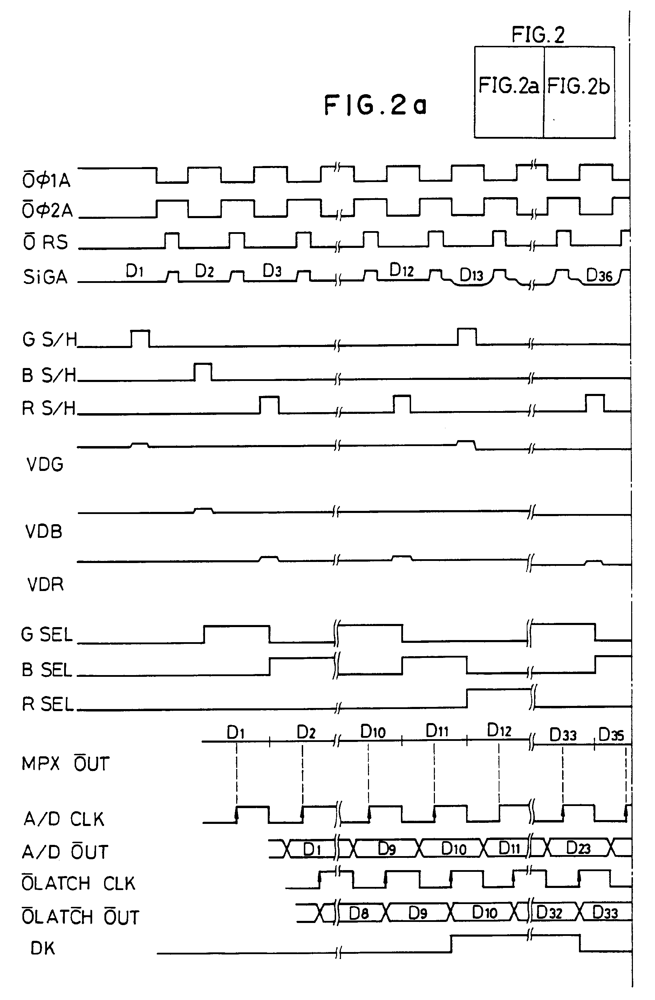

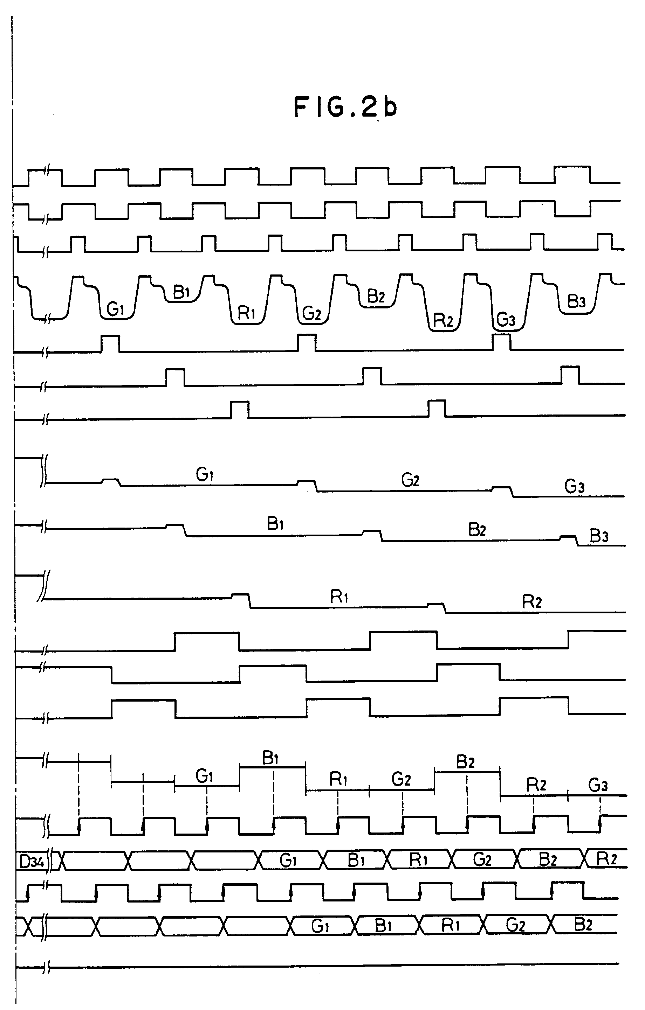

For instance, a color image signal obtained by reading a color orignial is separated into three color signals of R (red), G (green), and B (blue) by an S/H (sample and hold) circuit as shown in Fig. 1. Therefore, in the construction in which a color original is divided into five parts in the main scanning direction and is read out by a line sensor of five chips, the construction after the color image singals were sampled and held becomes fifteen (= 3 x 5) analog signal processing systems. Fig. 1 shows a processing block diagram in which an input color image signal of one channel is sampled and held and amplified in consideration of the white level and black level adjustments and, thereafter, it is returned to the color image signal of one system and is then input to an A/D converter, so that multiplexed digital data OLATCH OUT is obtained. Fig. 2 shows a timing chart of the operation of the circuit in Fig. 1.

As shown in the circuit of Fig. 1, each color separating circuit system has a DC level adjusting circuit in addition to the color balance adjusting circuit. The DC level of a black level signal which was read by the image sensor is shifted, thereby matching the levels among the channels of the image sensor constructed by a plurality of chips and coupling the channels.

However, in the construction shown in Fig. 1, since the dot sequential color signal is separated into the simultaneous color signals by the S/H circuit, after the S/H circuit, the signal processing circuit systems of only the number of color separation signals are needed. For instance, in the case of reading an original of, for instance, the A4 size whose width in the longitudinal direction is set to 297 mm, the image sensor of the silicon crystalline type is suitable to read at a high speed. However, in the case of the silicon crystalline type, it is difficult to form a long image sensor of such a type by one chip because of a limitaion in manufacturing. Therefore, a plurality of silicon crystalline chips are physically properly arranged to thereby form one line sensor. In this case, there is a drawback such that after the S/H circuit, it is necessary to use the signal processing circuit systems of the same type of only the number which is equal to the value in which the number of color separation signals is multiplied with the number of chips constructing the image sensor, so that the circuit construction is extremely large.

Furthermore, from document GB-A-2 155 273 a color image reading apparatus is known wherein image signals which are read by an imager are color separated. Then the color separated image signals are selected by means of a multiplexer which is responsible for selecting which color separated image signal of the read color signal is applied to an A/D converter in accordance with switching signals of a clock signal generator. Thereafter, the digitized, selected color separated image signal is corrected individual for each color separated image signal and also is corrected common for all color separated image signals. Then the signal is input to a D/A converter and a demultiplexer. The function of the multiplexer, the demultiplexer, the selection of the respective imager, the individual correction of the separated image signal, the various digital circuits, etc. are controlled by various clock signals.

Moreover, document JP-A-61 021 524 discloses a high speed data collecting system wherein a detection signal from several detectors is selected by a multiplexer circuit and then fed into a variable gain amplifier of an amplifier circuit. The gain required for each channel is selected by the variable gain amplifier. The output signal of the gain amplifier is converted into a digital signal by a sample-and-hold circuit and an A/D converter circuit. The switching of the gain amplifier and the multiplexer is controlled by switching signals.

## SUMMARY OF THE INVENTION

The present invention is made in consideration of the conventional problems and it is an object of the invention to provide a color image reading apparatus in which an analog color signal can be processed at a high speed by a simple circuit construction.

Another object of the invention is to provide a color image reading apparatus in which an amplitude of analog color image signal which is dot sequentially output can be corrected by a simple construction.

Still another object of the invention is to provide a color image reading apparatus in which the black level and white level of an analog color signal which is dot sequentially output can be efficiently corrected by a simple construction.

According to the invention the above object is accomplished by a color image reading apparatus comprising: reading means for color separation and reading a color image, and for dot sequentially outputting a plurality of analog color signals; and signal processing means for processing said plurality of analog color signals which are dot sequentially output from said reading means including analog signal processing means and digital signal processing means; wherein said analog signal processing means comprises: eliminating means for eliminating the DC level fluctuation of said plurality of analog color signals which are dot sequentially output from said reading means; amplifying means for amplifying said plurality of analog color signals which are dot sequentially output from said eliminating means and whose DC level fluctuation is eliminated; and switching means for sequentially switching a gain of said amplifying means in accordance with a color of the analog color signals to be amplified, said gain being determined by color controlling means.

The above and other objects and features of the present invention will become apparent from the following detailed description and the appended claims with reference to the accompanying drawings.

## BRIEF DESCRIPTION OF THE DRAWINGS

Fig. 1 is a block diagram showing a conventional example of one channel of an analog signal processing circuit;
Fig. 2, consisting of Figs. 2a and 2b, is a signal timing chart in each section in Fig. 1;
Fig. 3 is a block diagram showing a video signal processing unit of a reader section in a digital color copying machine according to an embodiment;
Fig. 4(a) is an arrangement diagram of a color CCD sensor;
Fig. 4(b) is a timing chart of a signal in each section in Fig. 4(a);
Fig. 5(a) is a diagram showing a CCD drive signal producing circuit (included in a system control pulse generator 16);
Fig. 5(b) is a timing chart of a signal in each section in Fig. 5(a);
Fig. 6, consisting of Figs. 6a and 6b, is a timing chart for driving a CCD;
Fig. 7 is a block diagram showing an embodiment of one channel of an analog signal processing circuit 9 in Fig. 1;
Fig. 8, consisting of Figs. 8a and 8b, is a timing chart of a signal in each section in Fig. 7;
Fig. 9 is a characteristic diagram of a voltage controlled type amplifying circuit;
Fig. 10 is a block diagram showing another embodiment of the analog signal processing circuit 9;
Fig. 11(a) is a circuit diagram of a multiplier 42 in Fig. 7;
Fig. 11(b) is a diagram showing a code table;
Figs. 12 and 13 are block diagrams showing further another embodiment of the analog signal processing circuit 9;
Fig. 14(a) is a circuit diagram of multipliers 63a to 63c in Fig. 12; and
Fig. 14(b) is a diagram showing a code table.

## DETAILED DESCRIPTION OF PREFERED EMBODIMENTS

A color image reading apparatus according to the present invention will now be described in detail hereinbelow with reference to the drawings.

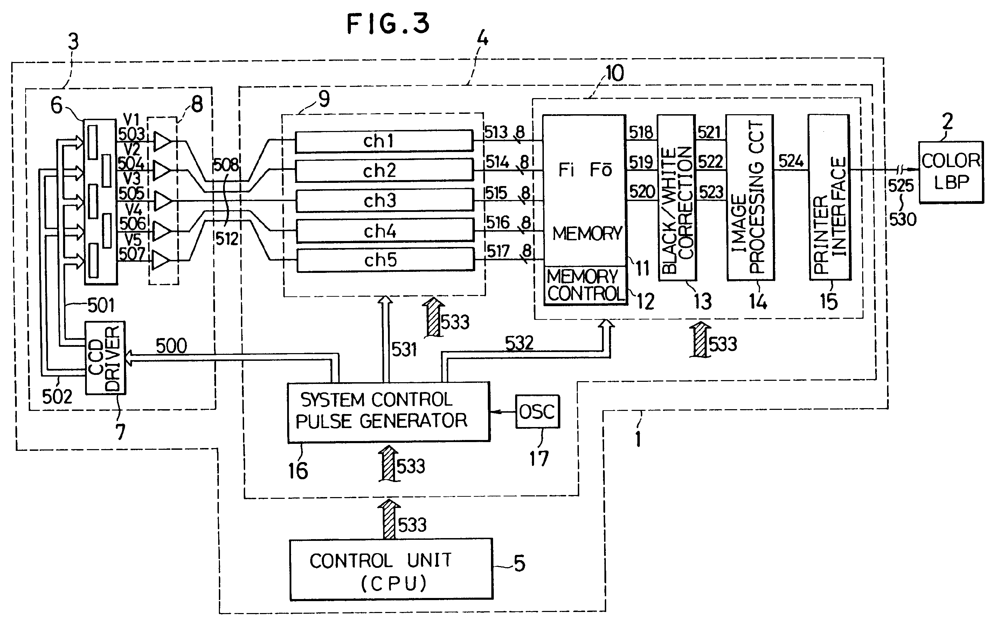

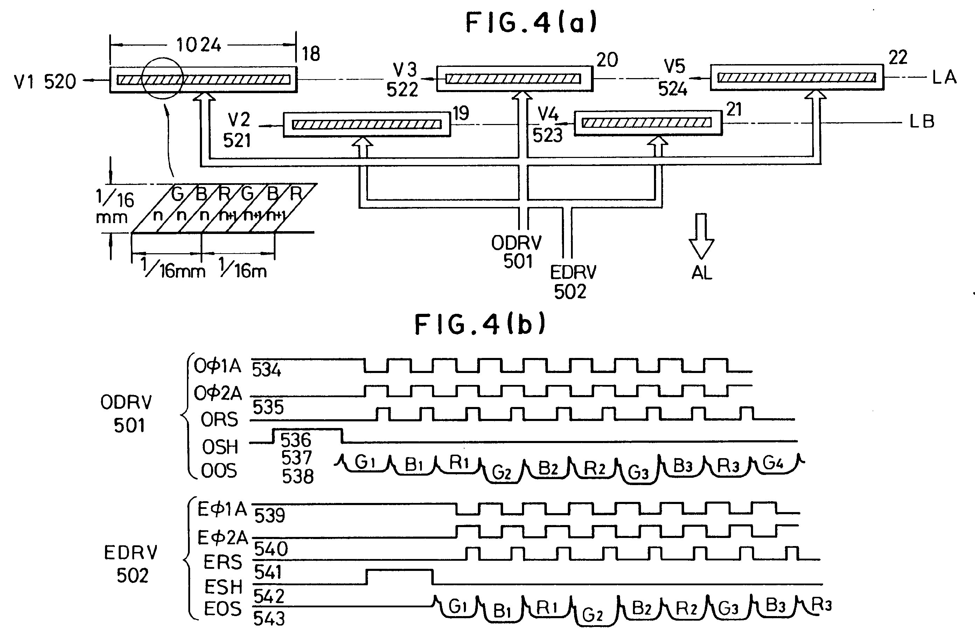

Fig. 3 shows an example of a signal processing block of the color image reading apparatus. An original is first exposed by an exposure lamp and its reflected lights are color separated and read every image by a color reading sensor 6 in an original scanning unit 3 and are amplified to predetermined levels by an amplifying circuit (preamplifier) 8. Reference numeral 7 indicates a CCD driver to supply a pulse signal to drive the color reading sensor. A necessary pulse source is produced by a system control pulse generator 16. Fig. 4 shows the color reading sensor and drive pulses. Fig. 4(a) shows the color reading sensor which is used in the embodiment. To divide the main scanning direction into five parts and to read, the color reading sensor has one-dimensional sensor of five chips. In each of chips 18 to 22, a length of 62.5 μm (1/16 mm) is set to one pixel and one chip corresponds to 976 pixels, that is, one pixel is divided into three parts of G, B and R in the main scanning direction as shown in the diagram, so that each chip totally has 3072 (= 1024 x 3) effective pixels. On the other hand, the chips 18 to 22 are formed on the same ceramics substrate. The first, third and fifth chips (18, 20, 22) are arranged on a same line LA, while the second and fourth chips (19, 21) are arranged on a line LB which is away from the line LA by four lines (the distance of 250 $\mu$m = 62.5 $\mu$m x 4). When an original is read, it is scanned in the direction of an arrow AL. Among the five CCD chips, the first, third and fifth chips are respectively independently driven synchronously with a group of drive pulses ODRV 501 and the second and fourth chips are respectively independently driven synchronously with a group of drive pulses EDRV 502. As shown in Fig. 4(b), O$\phi$1A, O$\phi$2A and ORS included in the ODRV 501 denote charge transfer clocks in each sensor. E$\phi$1A, E$\phi$2A and ERS included in the EDRV 502 denote charge reset pulses in each sensor. Those charge transfer clocks and charge reset pulses are substantially synchronously formed so as not to cause a jitter due to the mutual interference and noise limitaion between the first, third and fifth chips and the second and fourth chips. For this purpose, those clocks and pulses are produced by one reference oscillating source (OSC) 17 (Fig. 3).

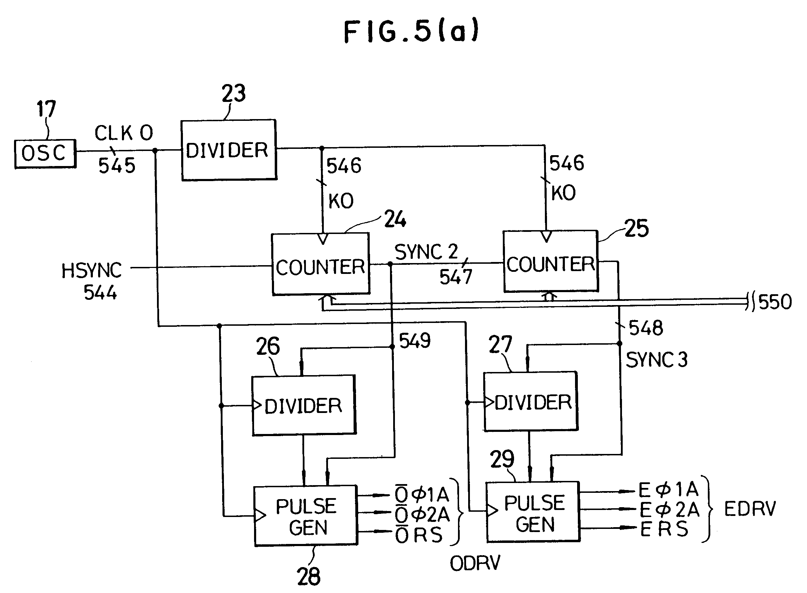

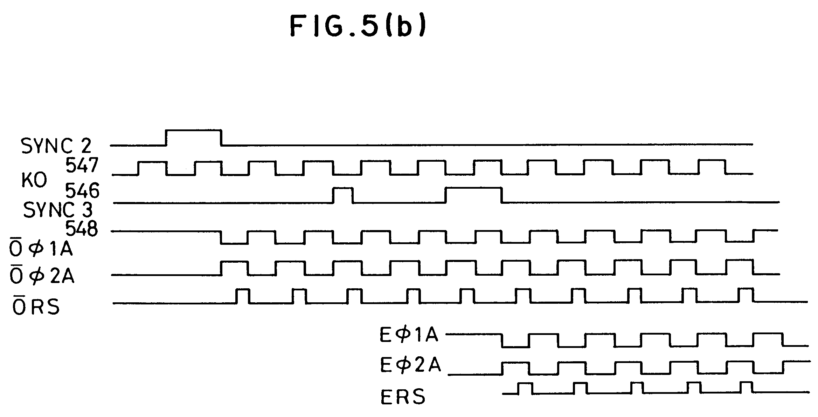

Fig. 5(a) is a block diagram of a circuit to form the ODRV 501 and EDRV 502. Fig. 5(b) shows a timing chart. The circuit of Fig. 5(a) is included in the system control pulse generator 16 in Fig. 1. A clock K$\phi$ 546 is formed by frequency dividing an original clock CLK$\phi$ which is generated from the single OSC 17 by a frequency divider 23. The clock K$\phi$ 546 is used to form reference signals SYNC$_2$ and SYNC$_3$ to determine the generation timings of the ODRV and EDRV. The output timings of the SYNC$_2$ and SYNC$_3$ are determined in accordance with set values of presettable counters 24 and 25 which are set by a signal line 550 connected to a CPU bus. The SYNC$_2$ and SYNC$_3$ initialize frequency dividers 26 and 27 and drive pulse generators 28 and 29. That is, each of the drive pulses uses a signal HSYNC 544 which is input to the block as a reference and is formed by the CLK$\phi$ which are all output from the OSC 17 as one oscillating source and by the frequency divided clocks which are all synchronously generated. Therefore, the pulse groups of the ODRV 501 and EDRV 502 are obtained as the synchronized signals having no jitter, so that the fluctuations of the singnals due to the interferences among the sensors can be prevented.

The sensor drive pulses ODRV 501 which were mutually synchronously derived are supplied to the first, third, and fifth sensor chips and the pulses EDRV 502 which were mutually synchronously obtained are supplied to the second and fourth sensor chips. Video signals V$_1$ to V$_5$ are independently output from the sensor chips 18 to 22 synchronously with the drive pulses. The video signals V$_1$ to V$_5$ are amplified to predetermined voltage values by the amplifying circuit (preamplifier) 8 which is independently provided every channel as shown in Fig. 3. Through coaxial cables 508 to 512, the signals V$_1$, V$_3$, and V$_5$ are output at a timing of a pulse OOS 538 in Fig. 4(b) and the

signals V$_2$ and V$_4$ are output at a timing of a pulse EOS 543 in Fig. 4(b) and the signals V$_1$ to V$_5$ are input to a video processing unit 4.

An explanation will now be made with respect to an analog signal processing circuit 9 in which by using a dot sequential amplitude control circuit, it is sufficient to use one signal processing circuit system per channel.

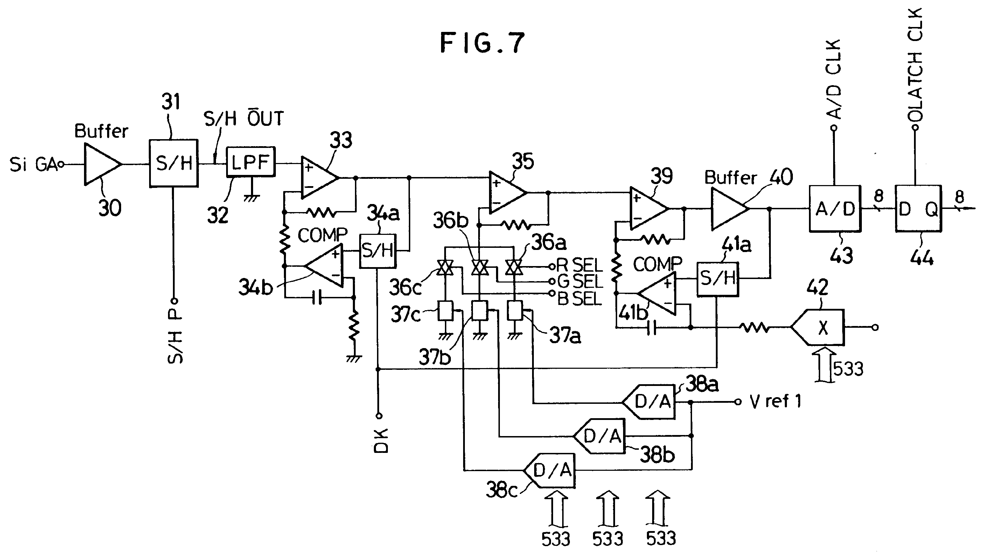

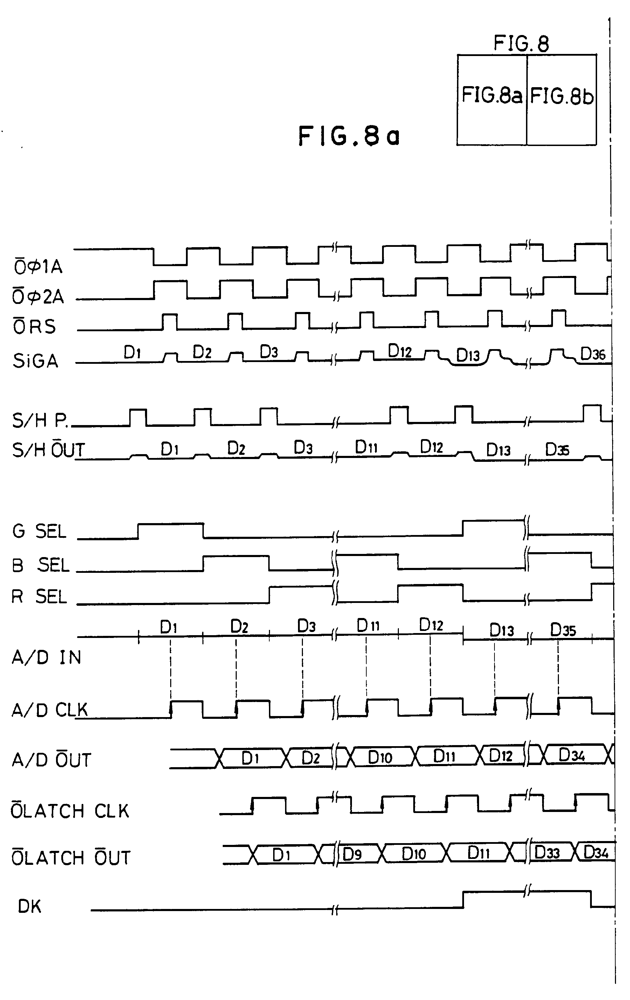

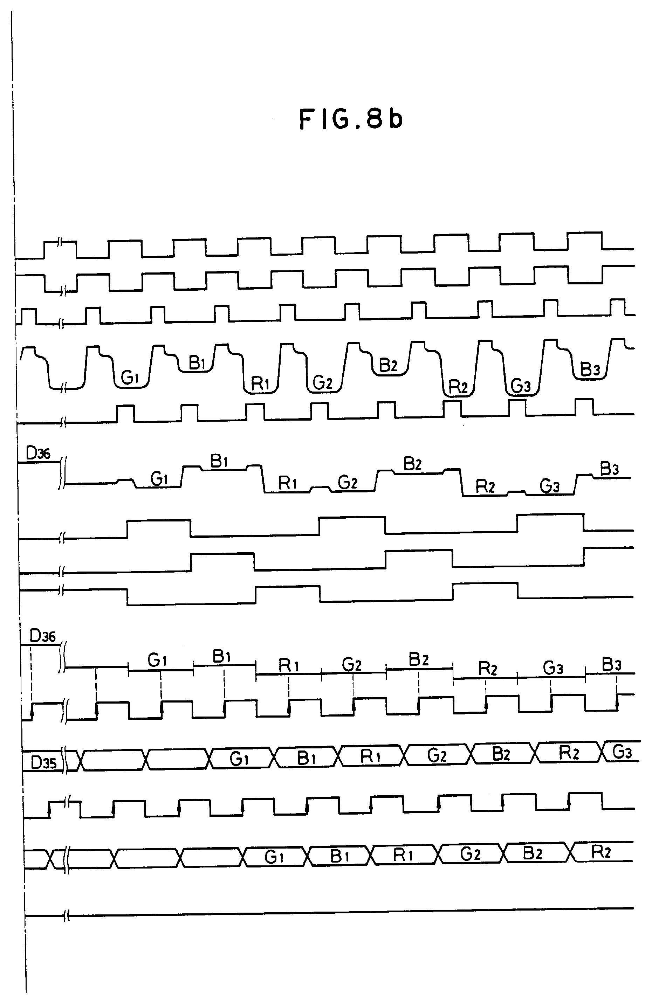

The analog color image signals V$_1$ to V$_5$ which were read out by the five-chip color sensor of the equal magnification type are input to the analog signal processing circuit 9 in Fig. 3 every channel, respectively. Since the signal processing circuit corresponding to each channel is the same circuit, the circuit of the channel 1 (ch1) will be described with reference to a processing block diagram of Fig. 7 together with a timing chart of Fig. 8.

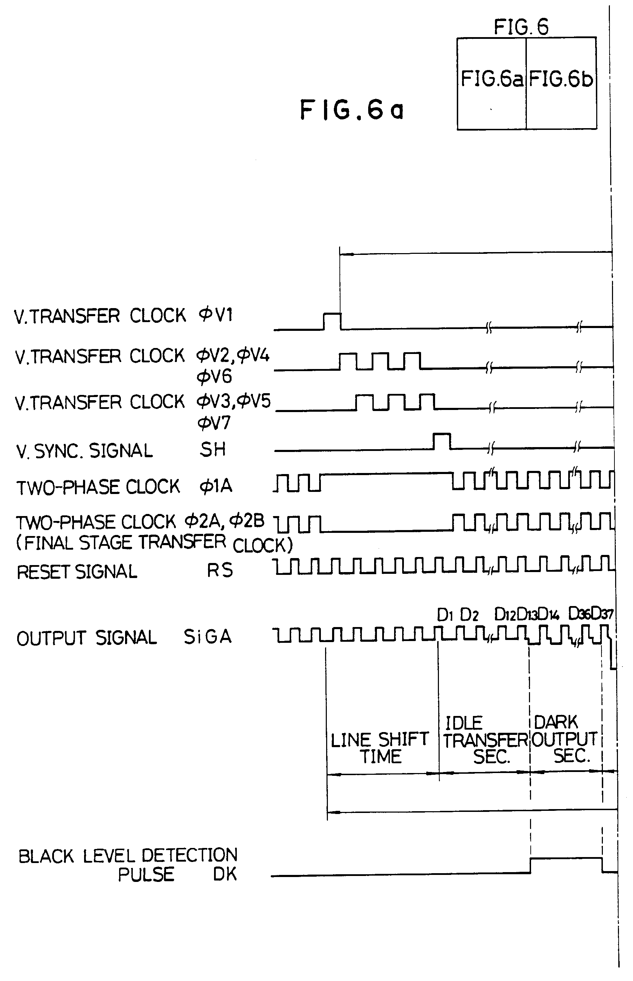

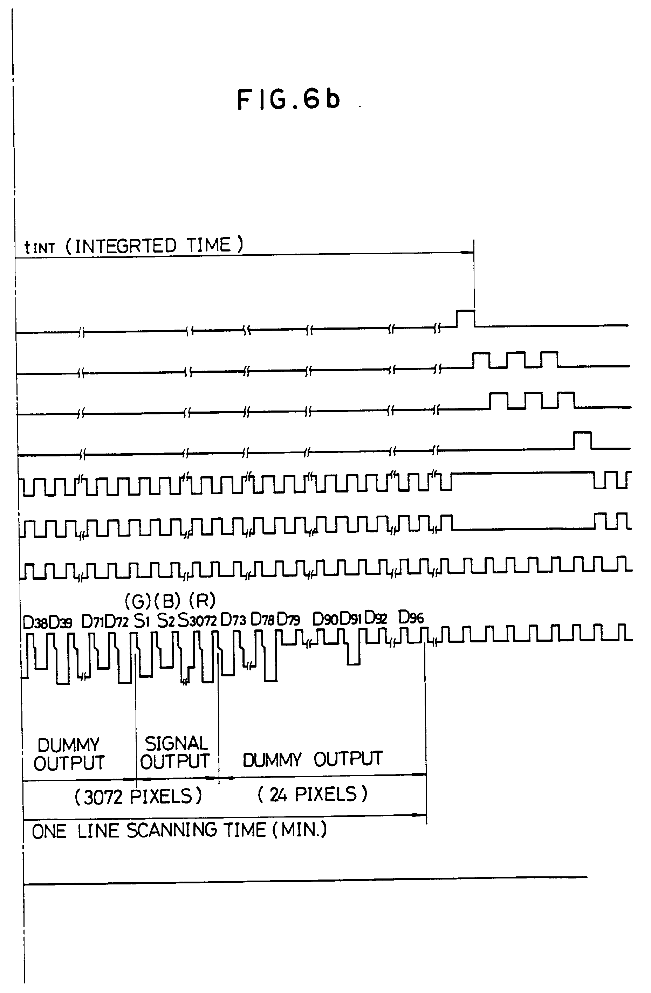

As shown by SiGA in Fig. 6, the analog color image signals are input to a buffer 30 in accordance with the order of G $\rightarrow$ B $\rightarrow$ R and are the composite signals which are constructed by total 3156 pixels comprising: the 3072 effective pixels; 12 pixels in the idle transfer section which is not connected to a photodiode of the color sensor, 24 pixels in the dark output section (optical black) formed by light shielding a region on the photodiode by using aluminum (A$\ell$), and 36 dummy pixels, in which these (12 + 24 + 36) pixels are provided before the effective pixels; and 24 dummy pixels after the effective pixels.

The analog color image signal SiGA is input to the buffer 30 and impedance converted. Next, an output signal of the buffer 30 is supplied to a sample and hold (S/H) circuit 31, by which the reset section in the composite signals is eliminated in accordance with S/H pulses, so that an S/H output signal (S/H OUT in Fig. 8) from which a waveform distortion in the case of driving at a high speed was eliminated is obtained. Since the unnecessary components at the frequency of the sampling pulses are included in the sampled and held dot sequential color signal, the color signal is then input to a low pass filter (LPF) 32 to eliminate the unnecessary components. The dot sequential color signal from which the unnecessary sampling frequency components were eliminated is input to an amplifier 33 and amplified to a specified signal output level and, at the same time, it is clamped to the zero level by a feedback clamping circuit in order to eliminate the DC level fluctuation of the analog color signal whose DC level fluctuates in an AC manner and to fix the DC level of the image signal to the optimum operating point of the amplifier 33.

The feedback clamping circuit comprises an S/H circuit 34a and a comparison amplifier 34b. The output level of the dark output section (optical black) of the analog color signal which is output from the amplifier 33 is detected by the S/H circuit 34a and compared with the GND level which is input to a minus input terminal of the comparison amplifier 34b. The difference is fed back to the amplifier 33, so that the dark output section of the output of the amplifier 33 is always fixed to the GND level. A DK signal indicates an interval of the dark output section of the analog color signal. By supplying the DK signal to the S/H circuit 34a, the DC level of the dark output section of the analog color signal is detected once for one horizontal scan period (1H). On the other hand, the feedback clamping circuit also has an object to eliminate the input offset when the amplitudes of R, G, and B are switched by a dot sequential amplitude control circuit at the next stage.

The signal obtained by clamping the dark output section of the analog color signal to the zero level is then input to the dot sequential amplitude control circuit, by which gains are dot sequentially adjusted every R, G, and B by the CPU control. That is, reference numerals 38a to 38c denote D/A converters, into which data is set through a data bus 533 of the CPU. A D/A output $V_{out}$ becomes as follows.

$$V_{out} = - V_{ref1}/N \ (0 < N < 1)$$

N is a binary fraction value of an input digital code.

Reference numerals 37a to 37c denote voltage controlled resistors comprising dual gate FETs or the like. Resistance values of the voltage controlled resistors 37a to 37c change depending on D/A output voltages of the D/A converters 38a to 38c, respectively. Reference numerals 36a to 36c denote analog switches comprising FETs or the like. When gate signals RSEL, GSEL, and BSEL are set to the "H" level, the analog switches 36a to 36c are turned on and are set to a low impedance. When the gate signals are set to the "L" level, they are turned off and are set to a high impedance. Initial data have been preset into the D/A converters 38a to 38c. Resistance values ($R_{VCRa}$ to $R_{VCRc}$) of the voltage controlled resistors 37a to 37c are set to predetermined values due to the D/A outputs upon data initialization, respectively. When only the gate signal RSEL is at the "H" level and the other gate signals GSEL and BSEL are at the "L" level, the gain of the R signal in the dot sequential color signal becomes

$$R_{VR} = 1 + Rf/(R_{ON} + R_{VCRa})$$

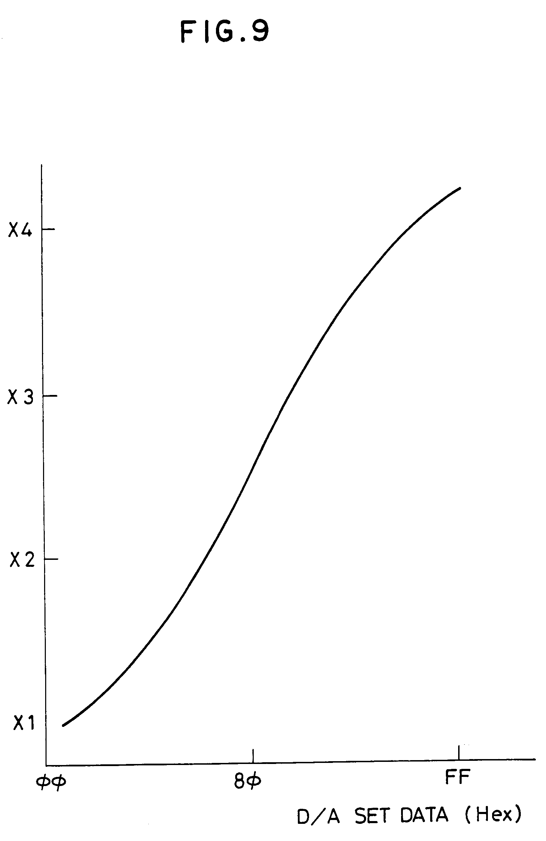

$R_f$ denotes a feedback resistor of an amplifier 35 and $R_{ON}$ indicates a resistance value when the analog switches 36a to 36c are turned on. Fig. 9 shows the relation between the D/A set data and the gain. The same shall also apply to the other color signals G and B. When the gate signals GSEL and BSEL are at the "H" level, the gains become

$$R_{VG} = 1 + Rf/(R_{ON} + R_{VCRb})$$

$$R_{VB} = 1 + Rf/(R_{ON} + R_{VCRc})$$

The RSEL, GSEL, and BSEL correspond to the intervals of the R, G, and B signals in the dot sequential color signal (Fig. 8). The gains can be dot sequentially switched by the gate signals. The data of the D/A converters 38a to 38c are set by the data bus 533 of the CPU in a manner such that the A/D conversion output data (R, G, and B) when the original scanning unit 3 read a uniform color plate are set to predetermined values. The levels of the R, G, and B signals of the dot sequential color signals are amplified by using the independent gains, thereby obtaining a color balance.

The analog color signal whose level was dot sequentially controlled is then input to an amplifier 39 and amplified until an input dynamic range of an A/D converter 43 and, at the same time, the DC level is controlled by a feedback clamping circuit 41 and a multiplier 42.

A feedback clamping system comprising the multiplier 42 and feedback clamping circuit 41 will now be described. The feedback clamping system has almost the same construction as the feedback clamping circuit 34 at the front stage. The multiplier 42 which is controlled by the CPU is connected for providing a reference voltage of the feedback clamping circuit comprising an S/H circuit 41a, and a comparison amplifier 41b. In the channel junction correction, which will be explained hereinlater, in order to shift the level of the black level image signal which was read, the reference voltage is varied by the multiplier 42 by the level which is determined by the digital data which was set in an internal latch circuit through the data bus 533 of the CPU. The analog color signal which was amplified by the amplifier 39 and a buffer 40 is clamped to the referencee voltage level.

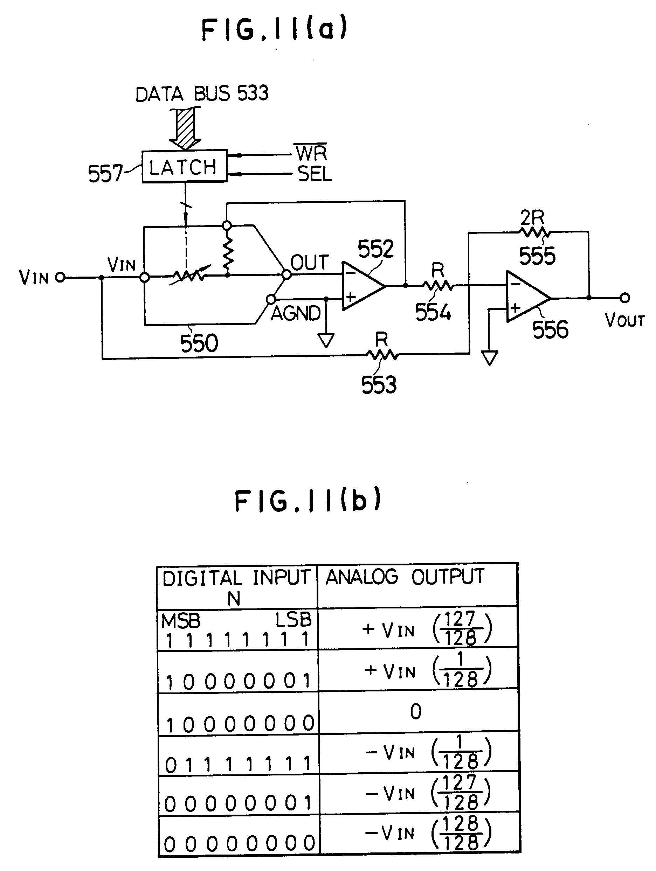

As shown in Fig. 11(a), the multiplier 42 is a full four-quadrant mode multiplier comprising: a multiplying D/A converter 550; operational amplifiers 552 and 556; resistors 553 and 554 each having a resistance value R; and a resistor 555 having a resistance value 2R. The multiplier 42 outputs a bipolar voltage as shown in Fig. 11(b) in accordance with the 8-bit digital data which was set from the CPU. The buffer 40 is an input buffer of the A/D converter 43 and is constructed as a high-speed buffer of a low output impedance in a manner such that its output impedance is set to a reference resistance value or less of a comparator in the A/D converter which assures the linearity accuracy of the A/D conversion.

The dot sequential color signal which was amplified and DC clamped to a predetermined white level and a predetermined black level is input to the A/D converter 43 and becomes digital data A/D OUT and is input to a latch circuit 44 for matching of the timing with that of the digital signal processing circuit and for certain digital data transmission.

The latch output data which was latched by a pulse OLATCH CLK is latched by a latch clock having the polarity opposite to that of the OLATCH CLK by a next digital signal processing circuit 10, so that the digital data can be received at a certain timing. The same shall also apply to the analog signal processing circuits of the other channels 2 to 5.

In Fig. 3, dot sequential color signals 513 to 517 of the respective channels which were digitally converted are input to the digital signal processing circuit 10 and images of the channels are connected by an FIFO memory 11, so that the dot sequential color signals of the channels become the parallel signals of three colors of R, G, and B (518 to 520).

The R, G, and B digital color signals are input to a black/white correction circuit 13. The black correction circuit will be first described. When an amount of light which enters the sensor is very small, the black level outputs of the channels 1 to 5 have a large variation among the chips and among the pixels. If the black level outputs are directly output and an image is output, line noises or uneven image occurs in the data section of the image. Therefore, it is necessary to correct an output fluctuation of the black portion. Prior to executing the copying operation, the original scanning unit 3 is moved to the position of a black plate having a uniform concentration arranged in a non-image region in the front edge portion of an original base plate, a halogen lamp is lit on, and a black level image signal is input to the circuit. The data of one line in the image data is stored in a black level memory and is set to a black reference value (a black reference value fetching mode).

For instance, if there is provided a width in the longitudinal direction of the A4 size in the main scanning direction, in the case of the resolution of 16 pel/mm, the number of pixels is set to 16 x 297 mm = 4752 pixels/color. To cover such a length, if five CCD chips each having a length of 61 mm are arranged to form one line, the number i of data of the black level data DK(i) can be set into a value within a range from 1 to 4880 in correspondence to 16 x 61 mm x 5 = 4880 pixels/color.

When an image is read, for the black level data DK(i), for instance, in the case of a blue signal, a black correction output is derived as $B_{in}(i) - DK(i) = B_{out}(i)$ (black correcting mode). A green signal $G_{in}$ and a red signal $R_{in}$ are also similarly controlled and black correction outputs $G_{out}$ and $R_{out}$ are obtained.

The white level correction (shading correction) circuit will now be described. In the white level correction, sensitivity variations of the illuminating system, optical system, and sensors are corrected on the basis of the white color data in the case where the original scanning unit 3 was moved to the position of a uniform white plate and the original was illuminated. Although a fundamental circuit construction of the white level correction circuit is substantially the same as that of the black correction circuit, there is a difference between them with respect to a point that the black correction is executed by using a subtractor, while the white correction is executed by using a multiplier. First, upon white correction, when the original scanning unit 3 is located at the position (home position) of the uniform white plate, that is, prior to executing the copying or reading operation, the exposure lamp is lit on and the data of one line in the image data of the uniform white level is stored into a white level memory.

For instance, if there is provided a width in the longitudinal direction of the A4 size in the main scanning direction, in the case of the resolution of 16 pel/mm, the number of pixels is set to 16 x 297 mm = 4752 pixels. If the image data of one chip of the CCD is constructed by 976 pixels (16 pel/mm x 61 mm), the total number of pixels of one line sensor is set to 976 x 5 = 4880 pixels. That is, the capacity of the white level memory has at least 4880 bytes. Assuming that the white plate data of the ith pixel is set to W(i), i has a value within a range from 1 to 4880. On the other hand, for the read value $D_{in}(i)$ of the ordinary image of the ith pixel with respect to W(i), the image data after correction becomes

$$D_{out}(i) = D_{in}(i) \times FF_H/W(i)$$

The white correction is executed with respect to each color of green (G), blue (B), and red(R).

Image signals (521 to 523) of three colors which were subjected to the black correction and white correction are input to an image processing circuit 14 and are image processed by a logarithm converting circuit, a color correction circuit, black adding circuit, and an under color removing (UCR) circuit and the image processed signal is output (524 in Fig. 3). The logarithm converting circuit converts the luminance data into the concentration data. The color correction circuit (input masking and output masking) corrects the spectral characteristics of the color separation filters of the CCD sensor and corrects the absorbing characteristics of the unnecessary components of the color toners (Y, M, C) which are copy transferred to a transfer paper in a color printer 2. The black adding circuit calculates the $Min(Y_i, M_i, C_i)$ (the minimum value among $Y_i$, $M_i$, and $C_i$) from the color component image data $Y_i$, $M_i$, and $C_i$ and, thereafter, adds the black toner by using the calculated $Min(Y_i, M_i, C_i)$ as a black. The UCR circuit reduces addition amounts of the color toner materials in accordance with the black component added.

The image signals of three colors are then input to a printer interface 15. Interface signals comprise; a digital video signal; a sync signal (ITOP) in the image feeding direction (sub scanning direction); a sync signal (BD) in the raster scanning direction (main scanning direction) which is once generated every raster scan; a sync clock (VCLK) to transmit the digital video signal to the color printer 2; a sync signal (HSYNC) which is formed synchronously with the NCLK without a jitter on the basis of the BD signal; and a signal (SRCOM) for executing half duplex bidirectional serial communication. The image data and commands are sent from the reader unit to the printer unit via those signal lines. State information of the printer unit, for instance, information with respect to paper jam, absence of paper, waiting mode, and the like is mutually transmitted and received between the reader unit and the printer unit.

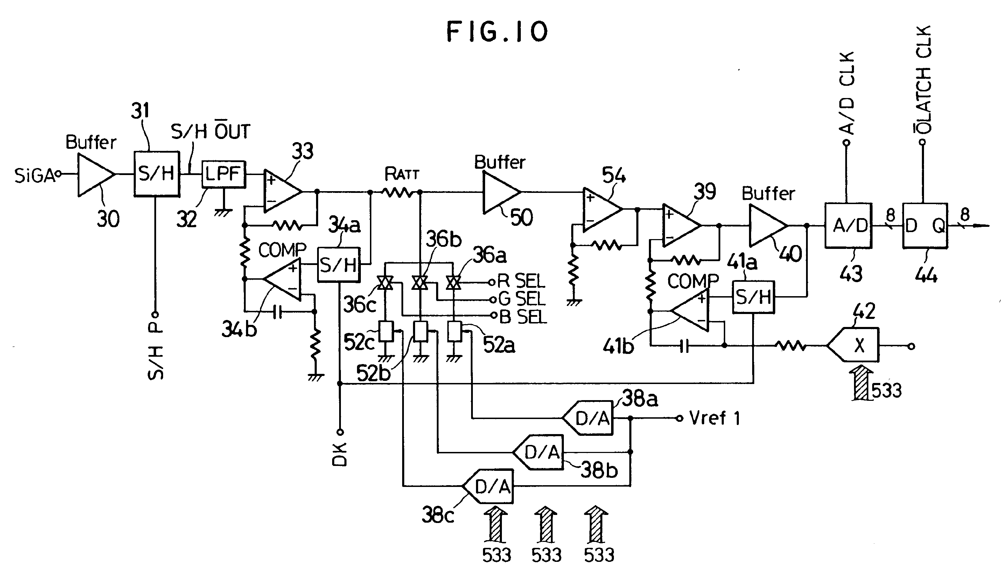

In the embodiment, the dot sequential amplitude control circuit has been constructed as a gain switching type amplifying circuit. However, the similar effect can be obtained even if such a control circuit is constructed by an attenuator switching circuit and an amplifying circuit arranged at the post stage. Such a construction is shown in Fig. 10. In Fig. 10, a resistor $R_{ATT}$, voltage controlled resistors 52a to 52c, an amplifier 54, and a buffer 50 are provided in place of the amplifier 35 in Fig. 7 and the other construction is the same as that in Fig. 7. The resistance values $R_{VCRa}$ to $R_{VCRc}$ of the voltage controlled resistors 52a to 52c are controlled by the output voltages of the D/A converters 38a to 38c. For instance, when the analog switch 36a (for the R signal) is turned on, an attenuation factor of the R signal in the dot sequential color signal is

$$(R_{ON} + R_{VCRa})/(R_{ATT} + R_{ON} + R_{VCRa})$$

Assuming that a gain of the amplifier 54 is set to A, a gain of the R signal at an output of the amplifier 54 is

$$R_V = A(R_{ON} + R_{VCRa})/(R_{ATT} + R_{ON} + R_{VCRa})$$

The same shall also apply to the other color signals G and B, so that the amplitude can be dot sequentially controlled.

On the other hand, although the embodiment has been described with respect to an example of the color image forming apparatus using an electrophotograph, various recording methods such as ink jet recording, thermal copy transfer recording, and the like can be also applied without limiting to the electrophotograph. In addition, although the embodiment has been described with regard to an example in which the reading unit and the image forming unit are closely arranged as a copying apparatus, the invention can be also obviously applied to a type in which the reading unit and the image forming unit are separately arranged and the image data is transferred by a communication line.

As described above, by providing the dot sequential amplitude control circuit which can time sequentially control the amplitude of each color separation signal in the state of the dot sequential color signal which is output from the image sensor as it is, the amplitudes of the color separation signals can be adjusted by only the S/H circuit and the signal processing circuit at the post stage of one system per chip constructing the image sensor without separating the dot sequential color signal into the simultaneous color signals and adjusting the amplitudes by the respective circuit systems. Therefore, the circuit construction is simplified and the apparatus can be miniaturized.

As described above, according to the invention, the signal processing system is simplified and, particularly, in the image sensor comprising a plurality of image sensor chips, the circuit scale can be fairly reduced.

In the above-described construction of the embodiment, the white level of the analog color image signal has been dot sequentially corrected before the black level is corrected. An example of a construction in which the white level of the analog color image signal is color sequentially corrected after the black level was corrected will now be described.

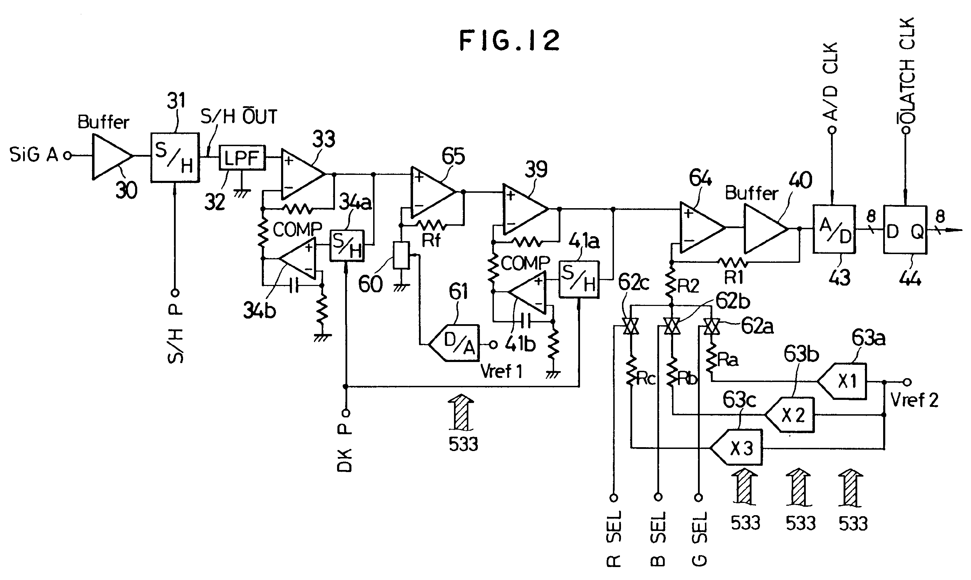

Fig. 12 is a block diagram showing another consturction of the analog signal processing circuit 9. In Fig. 12, the same parts and elements as those shown in Fig. 7 are designated by the same reference numerals. The operation of Fig. 12 will now be explained hereinbelow. As mentioned above, the color image signals obtained by dividing the original into five parts in the main scanning direction and reading the original are respectively input to the analog signal processing circuits 9 corresponding to the channels. Since the signal processing circuit 9 have the same construction, the circuit of the channel 1 (ch1) will be described.

As shown in Fig. 12, the analog color image signal SiGA is input to the buffer 30 and is impedance converted. The reset section in the composite signal is then eliminated by the sample and hold (S/H) circuit 31 in response to an S/H pulse (S/HP), so that an S/H output signal from which only a waveform distortion in the case of driving at a high speed was eliminated is obtained. Since the dot sequential color signal which was sampled and held includes the unnecessary component at the frequency of the sampling pulse, it is input to the low pass filter (LPF) 32 to eliminate the unnecessary component. The dot sequential color signal from which the unnecessary sampling frequency component was eliminated by the LPF 32 is input to the amplifier 33 and amplified until a specified output level and, at the same time, it is clamped to the zero level by the feedback clamping circuit 34 comprising the S/H circuit 34a and comparison amplifier 34b in order to eliminate the DC level fluctuation of the analog color signal whose DC level fluctuates in an AC manner and to fix the DC level of the image signal to the optimum operating point of the amplifier 33. That is, the output level of the dark output section (optical black) in the analog color signal which is output from the amplifier 33 is detected by the S/H circuit 34a and is compared with the GND level which is input to a minus input terminal of the comparison amplifier 34b by the amplifier 34b. The differential signal is fed back to the amplifier 33, so that the dark output section in the output signal of the amplifier 33 is always fixed to the GND level. The DK signal which is input to the S/H circuit 34a indicates the interval of the dark output section in the analog color signal. By supplying the DK signal to the S/H circuit 34a, the DC level of the dark output section in the analog color signal is once detected for one horizontal scan period (1H). The feedback clamping circuit 34 also has the object to eliminate the input offset when the amplitude is varied by the amplitude control circuit at the next stage. The signal obtained by clamping the dark output section in the analog color signal to the zero level by the feedback clamping circuit 34 is then input to an amplifier 65 constructing the amplitude control circuit. The gains of the dot sequential color signals are commonly adjusted by the CPU control here.

Reference numeral 61 indicates a D/A converter into which data is set through the data bus 533 of the CPU. An output $V_{out}$ of the D/A converter 61 becomes

$$V_{out} = -V_{ref1}/N \ (0 < N < 1)$$

N denotes a binary fraction value of the input digital code. Reference numeral 60 indicates a voltage controlled resistor comprising a dual gate FET or the like and its resistance value changes depending on the output voltage of the D/A converter 61. Initial data has been preset into the D/A converter 61. A resistance value ($R_{VCR}$) of the voltage controlled resistor 60 is set to a predetermined value in dependence on the D/A output at that time. A gain of the amplifier 35 at this time is

$$A_V = 1 + Rf/R_{VCR}$$

RF denotes a feedback resistance of the amplifier 65.

There is a relation as shown in Fig. 9 between the set data in the D/A converter 61 and the gain of the amplifier 65. Data of the D/A converter 61 is set by the CPU data bus 533 in a manner such that the A/D conversion output data (R, G, B) when the original scanning unit 3 read a uniform white plate set to predetermined values. The levels of the R, G, and B signals of the dot sequential color signals are matched by together using the amplitude varying means of the respective color signals in the dot sequential DC level control circuit, which will be explained hereinlater, thereby obtaining a color balance.

The level controlled dot sequential color signal from the amplifier 65 is then input to the amplifier 39 and amplified until a predetermined level and is clamped to the zero level by the feedback clamping circuit 41 comprising the S/H circuit 41a and comparison amplifier 41b. Since the feedback clamping circuit 41 has the same construction as that of the feedback clamping circuit 34 at the front stage, its operation is not described in detail here. However, the feedback clamping circuit 41 is provided to eliminate the output offset which is caused due to the variable change in the gain by the amplitude control circuit due to the D/A converter 61 at the front stage and to fix the dark output section in the analog color signal to the zero level.

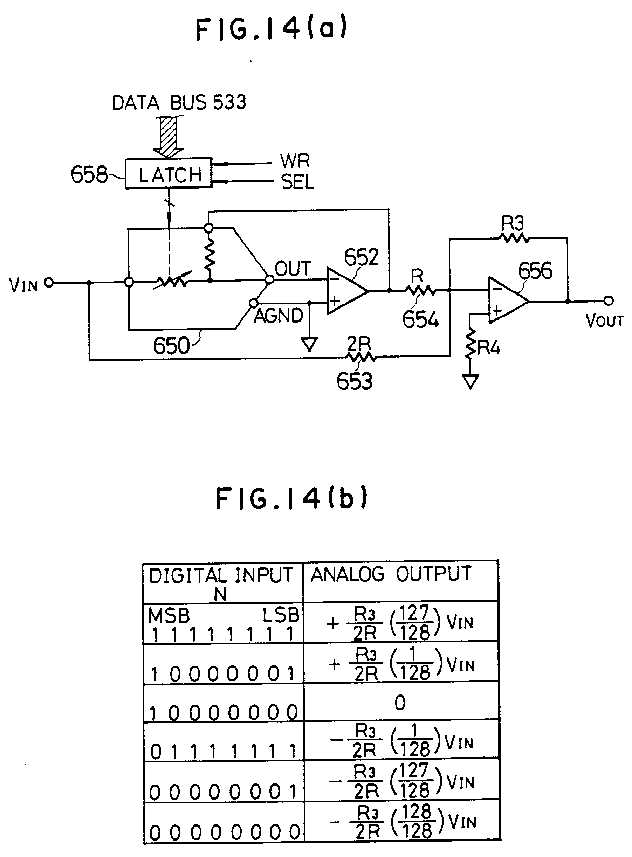

The analog color signal which was again clamped to the zero level by the feedback clamping circuit 41 is then input from the amplifier 39 to the dot sequential DC level control circuit having the following construction. The levels of the R, G, and B signals in the dot sequential signal are matched and the DC levels are dot sequentially adjusted every R, G and B by the CPU control. It is an object of such a level adjustment to shift the DC level of the readout black level image signal in a channel junction correction, which will be explained hereinbelow. Reference numeral 62a to 62c denote analog switches comprising FETs or the like. When the gate signals GSEL, BSEL, and RSEL are set to the "H" level, the switches 62a to 62c are turned on and are set into a low impedance. When the gate signals are set to the "L" level, the switches 62a to 62c are turned off and are set into a high impedance. Reference numerals 63a and 63c denote multipliers. As shown in Fig. 14(a), the multipliers 63a to 63c are full four-quadrant mode multipliers comprising: a multiplying D/A converter 650; operational amplifier 652 and 656; a resistor 654 having a resistance value R; a resistor 653 having a resistance value 2R; and resistors $R_3$ and $R_4$. A bipolar voltage is output as shown in Fig. 11(b) in accordance with 8-bit digital data set from the CPU. In Fig. 12, Ra, $R_b$, and $R_c$ denote resistors to vary a gain of an amplifier 64 every G, B, and R in order to obtain a color balance of the dot sequential color signal. When the signal GSEL is at the "H" level, the gain of the amplifier 64 for the G signal becomes

$$1 + R_1/(R_2 + R_{ON} + R_a) = A_G$$

$R_{ON}$ denotes a resistance value when the analog switches 62a to 62c are turned on. The same shall also apply to the other color signals B and R. When the gate signals BSEL and RSEL are at the "H" level, the gains of the amplifier 64 respectively become

$$1 + R_1/(R_2 + R_{ON} + R_b) = A_B$$

$$1 + R_1/(R_2 + R_{ON} + R_c) = A_R$$

Now, assuming that the color ratio of the dot sequential color signal of the color reading CCD sensor is set such that G : B : R = k : 1 : ℓ, in order to obtain a color balance, the resistance values of the resistors $R_a$, $R_b$, and $R_c$ are selected in a manner such that the gains of the amplifier 64 for the G, B, and R signals are set as follows.

$$A_G : A_B : A_R = 1/k : 1 : 1/ℓ$$

Now, since the gains of the amplifier 64 for the G, B, and R signals change, in order to equalize the DC output voltages of the amplifier 64 with respect to the G, B, and R signals for the data values which are set into the multipliers 63a to 63c by the CPU, the value of the resistor $R_3$ shown in Figs. 14(a) and 14(b) is selected with respect to, for instance, the G signal such that

$$R_3 = (2R/R_1) \times (R_2 + R_{ON} + R_a)$$

from the relation

$$(R_3/2R) \times [R_1/(R_2 + R_{ON} + R_a)] = 1$$

With respect to the other color signals B and R as well, by selecting the value of each $R_3$ such that

$$R_3 = (2R/R_1) \times (R_2 + R_{ON} + R_b)$$

$$R_3 = (2R/R_1) \times (R_2 + R_{ON} + R_c)$$

the DC output voltages of the amplifier 64 for the G, B, and R signals are equalized with respect to the CPU set data values in the multipliers 63a to 63c. A situation such that the DC levels with respect to G, B, and R differ by changing the gain of the amplifier 64 does not occur. As mentioned above, the color balance of the color signals is obtained by the dot sequential DC level control circuit and the DC level of the dot sequential color signal is time sequentially controlled by the CPU set data.

The buffer 40 is an input buffer of the A/D converter 43 and is constructed as a high-speed buffer of a low output impedance in a manner such that its output impedance is set to a value of a reference resistance value or less of a comparator provided in the A/D converter 43 for assuring the linearity accuracy of the A/D converter 43.

The dot sequential color signal which was amplified and DC clamped to a predetermined white level and a predetermined black level is converted into the digital data A/D OUT by the A/D converter 43 and is then input to the latch circuit 44 to match the timing with that of the digital signal processing circuit and to execute certain digital data transmission.

In the latch circuit 44, the latch output data latched by the latch clock OLATCH CLK is latched by the digital signal processing circuit at the next stage by the latch clock having the polarity opposite to the polarity of the OLATCH CLK, so that it is received at a certain timing. The same shall also apply to the analog signal processing circuits of the channels 2 to 5 in Fig. 1.

As mentioned above, the dot sequential color signals 513 to 517 of the channels which were digitally converted by the analog signal processing circuits 9 are input to the digital signal processing circuit 10. The images of the channels are connected by the FIFO memory 11. The dot sequential color signals of the channels become the parallel signals 518 to 520 of three colors of R, G, and B.

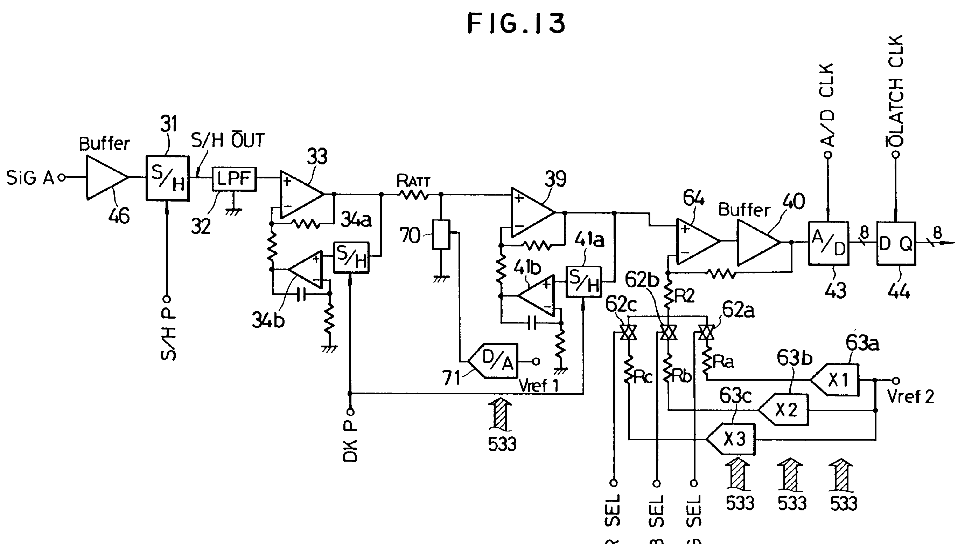

In the embodiment of Fig. 12, the amplitude control circuit has been constructed as a gain variable amplifying circuit. However, the similar effects can be also obtained even if the amplitude control circuit is constructed by an attenuator circuit. Fig. 13 shows an example of such a construction. In Fig. 13, a resistor $R_{ATT}$ and a voltage controlled resistor 70 are used in place of the amplifier 65 in Fig. 12 and the other construction is similar to that in Fig. 12.

Although the above embodiment has been described with respect to an example of the color image forming apparatus using an electrophotograph, various recording methods such as ink jet recording, thermal copy transfer recording, and the like can be also applied without limiting to the electrophotograph. On the other hand, although the embodiment has been described with respect to an example of the copying apparatus in which the reading unit and the image forming unit are closely arranged, the invention can be also obviously applied to a type in which the reading unit and the image forming unit are separately arranged and image data is transferred by a communication line.

As described above, the circuit system for processing the image sensor output signal as an analog signal has been constructed by the amplitude control circuit and dot sequential DC level control circuit. Thus, there is no need to construct such that the dot sequential color signal is separated into simultaneous color signals via the S/H circuit every color and a similar signal processing circuit is provided for each color. It is sufficient to use one signal processing circuit system per channel of the image sensor chip. Particularly, in the case of an image sensor comprising a plurality of image sensor chips, the circuit scale can be extremely reduced.

On the other hand, by controlling the amplitude of the dot sequential analog video signal which is output from the image sensor in a state of the dot sequential signal as it is and by controlling the DC level, the amplitude and DC level of each color separation signal can be adjusted by, for instance, only the S/H circuit and subsequent signal processing circuit of one system per chip constructing the image sensor without separating the dot sequential color signal into the simultaneous color signals and adjusting the amplitude and DC level by each circuit system. Therefore, the circuit construction is simplified and the apparatus can be miniaturized.

Although the present invention has been described above with respect to preferred embodiments, the invention is not limited to the foregoing embodiments but many modifications and variations are possible within scope of the appended claims of the invention.

## Claims

1. A color image reading apparatus comprising:
   reading means (3, 6; 18 to 22) for color separation and reading a color image, and for dot sequentially outputting a plurality of analog color signals ($V_1$ to $V_5$); and
   signal processing means (4, 9, 10) for processing said plurality of analog color signals ($V_1$ to $V_5$) which are dot sequentially output from said reading means (3, 6; 18 to 22) including analog signal processing means (9) and digital signal processing means (10);

said color image reading apparatus **being characterized in that**

said analog signal processing means (9) comprises:

eliminating means (33, 34a, 34b) for eliminating the DC level fluctuation of said plurality of analog color signals ($V_1$ to $V_5$) which are dot sequentially output from said reading means (3, 6; 18 to 22); amplifying means (35; 64) for amplifying said plurality of analog color signals ($V_1$ to $V_5$) which are dot sequentially output from said eliminating means (33, 34a, 34b) and whose DC level fluctuation is eliminated; and switching means (36a to 36c; 62a to 62c) for sequentially switching a gain of said amplifying means (35; 64) in accordance with a color of the analog color signals ($V_1$ to $V_5$) to be amplified, said gain being determined by color controlling means (38a to 38c; 63a to 63c).

2. A color image reading apparatus according to claim 1, **being characterized by** converting means (43) for converting said plurality of analog color signals ($V_1$ to $V_5$) which are amplified and are dot sequentially output by said amplifying means (35; 64) into a plurality of digital color signals (513 to 517).

3. A color image reading apparatus according to claim 1 or 2, **characterized in that** said amplifying means (35) amplifies in a manner such that a plurality of analog color signals ($V_1$ to $V_5$) with respect to a white image are set into a predetermined level, respectively.

4. A color image reading apparatus according to claim 1 or 2, **being characterized by** black correcting means (65, 60, 61) for setting a black level of said plurality of analog color signals ($V_1$ to $V_5$), which are dot sequentially output from said reading means (6; 18 to 22), to a predetermined value; and white correcting means (64, $R_1$, $R_2$) including said amplifying means (64) for correcting a white level of said plurality of analog color signals ($V_1$ to $V_5$) whose black level was corrected by said black correcting means (65, 60, 61) and which are dot sequentially output.

**Patentansprüche**

1. Farbbildlesegerät, mit:
Lesemitteln (3, 6; 18 bis 22) zur Farbtrennung und zum Lesen eines Farbbildes und zur punktsequentiellen Ausgabe einer Vielzahl analoger Farbsignale ($V_1$ bis $V_5$); und mit Signalverarbei-

tungsmitteln (4, 9, 10) zur Verarbeitung der Vielzahl analoger Farbsignale ($V_1$ bis $V_5$), die punktsequentiell ausgelesen werden von den Lesemitteln (3, 6, 18 bis 22), die analoge Signalverarbeitungsmittel (9) und digitale Signalverarbeitungsmittel (10) enthalten, **dadurch gekennzeichnet,** daß die analogen Signalverarbeitungsmittel (9) zusammengesetzt sind aus:
Beseitigungsmitteln (33, 34a, 34b) zur Beseitigung der DC-Pegelschwankung der Vielzahl analoger Farbsignale ($V_1$ bis $V_5$), die punktsequentiell von den Lesemitteln (3, 6; 18 bis 22) ausgegeben werden;
einem Verstärkungsmittel (35; 64) zur Verstärkung der Vielzahl analoger Farbsignale ($V_1$ bis $V_5$), die punktsequentiell von den Beseitigungsmitteln (33, 34a, 34b) ausgegeben werden und deren DC- Pegelschwankungen beseitigt wird; und aus
Schaltmitteln (36a bis 36c; 62c bis 62c) zur sequentiellen Schaltung einer Verstärkung des Verstärkungsmittels (35; 64) gemäß einer Farbe des analogen zu verstärkenden Farbsignals ($V_1$ bis $V_5$), wobei die Verstärkung von den Farbsteuermitteln (38a bis 38c; 63a bis 63c) bestimmt wird.

2. Farbbildlesegerät nach Anspruch 1, **gekennzeichnet durch** Umsetzmittel (43), zur Umsetzung der von dem Verstärkungsmittel (35; 64) verstärkten und punktsequentiell ausgegebenen Vielzahl analoger Farbsignale ($V_1$ bis $V_5$) in eine Vielzahl digitaler Farbsignale (513 bis 517).

3. Farbbildlesegerät nach Anspruch 1 oder 2, **dadurch gekennzeichnet,** daß das Verstärkungsmittel (35) in einer solchen Weise verstärkt, daß eine Vielzahl analoger Farbsignale ($V_1$ bis $V_5$) in Hinsicht auf ein Weißbild dementsprechend auf einen vorbestimmten Pegel gesetzt wird.

4. Farbbildlesegerät nach Anspruch 1 oder 2, **gekennzeichnet durch** Schwarzkorrekturmittel (65, 60, 61) zum Einstellen eines Schwarzpegels einer punktsequentiell von den Lesemitteln (6; 18 bis 22) ausgegebenen Vielzahl analoger Farbsignale ($V_1$ bis $V_5$) auf einen vorbestimmten Wert; und durch das Verstärkungsmittel (64) enthaltende Weißkorrekturmittel (64, $R_1$, $R_2$) zur Korrektur eines Weißpegels der Vielzahl analoger Farbsignale ($V_1$ bis $V_5$), deren Schwarzpegel von den SchwarzKorrekturmitteln (65, 60, 61) korrigiert wurde, und die punktsequentiell ausgegeben werden.

**Revendications**

1. Appareil de lecture d'images en couleurs comprenant:

des moyens de lecture (3, 6; 18 à 22) pour la séparation des couleurs et la lecture d'une image en couleurs, et pour délivrer séquentiellement par points une pluralité de signaux analogiques en couleur ($V_1$ à $V_5$); et

des moyens (4, 9, 10) de traitement de signaux pour traiter ladite pluralité de signaux analogiques en couleur (V1 à V5) qui sont délivrés séquentiellement par points par lesdits moyens de lecture (3, 6; 18 à 22) comportant un moyen (9) de traitement de signaux analogiques et un moyen (10) de traitement de signaux numériques;

ledit appareil de lecture d'images en couleurs étant caractérisé en ce que

ledit moyen (9) de traitement de signaux analogiques comprend:

des moyens (33, 34a, 34b) de suppression pour supprimer la fluctuation du niveau de courant continu de ladite pluralité de signaux analogiques en couleur ($V_1$ à $V_5$) qui sont délivrés séquentiellement par points par lesdits moyens de lecture (3, 6; 18 à 22);

des moyens d'amplification (35; 64) pour amplifier ladite pluralité de signaux analogiques en couleur ($V_1$ à $V_5$) qui sont délivrés séquentiellement par points par lesdits moyens de suppression (33, 34a, 34b) et dont la fluctuation du niveau de courant continu est supprimée; et

des moyens de commutation (36a à 36c; 62a à 62c) pour commuter séquentiellement un gain desdits moyens d'amplification (35; 64) conformément à une couleur des signaux analogiques en couleur ($V_1$ à $V_5$) à amplifier, ledit gain étant déterminé par des moyens (38a à 38c; 63a à 63c) de commande de la couleur.

2. Appareil de lecture d'images en couleurs selon la revendication 1, caractérisé par

des moyens de conversion (43) pour convertir ladite pluralité de signaux analogiques en couleur ($V_1$ à $V_5$) qui sont amplifiés et qui sont délivrés séquentiellement par points par lesdits moyens d'amplification (35; 64) en une pluralité de signaux numériques en couleur (513 à 517).

3. Appareil de lecture d'images en couleurs selon la revendication 1 ou 2, caractérisé en ce que

lesdits moyens d'amplification (35) amplifient de telle sorte qu'une pluralité de signaux analogiques en couleur ($V_1$ à $V_5$) par rapport à une image blanche sont réglés à un niveau prédéterminé, respectivement.

4. Appareil de lecture d'images en couleurs selon la revendication 1 ou 2, caractérisé par

des moyens (65, 60, 61) de correction du noir pour établir un niveau noir de ladite pluralité de signaux analogiques en couleur ($V_1$ à $V_5$), qui sont délivrés séquentiellement par points par lesdits moyens de lecture (6; 18 à 22), à une valeur prédéterminée; et

des moyens (64, $R_1$, $R_2$) de correction du blanc comportant lesdits moyens d'amplification (64) pour corriger un niveau blanc de ladite pluralité de signaux analogiques en couleur ($V_1$ à $V_5$) dont le niveau noir a été corrigé par lesdits moyens (65, 60, 61) de correction du noir et qui sont délivrés séquentiellement par points.

FIG.1

FIG.2

| FIG.2a | FIG.2b |

## FIG.2a

Ō𝜙1A

Ō𝜙2A

Ō RS

SiGA    D1    D2    D3    D12    D13    D36

G S/H

B S/H

R S/H

VDG

VDB

VDR

G SEL

B SEL

R SEL

MPX ŌUT    D1    D2    D10    D11    D12    D33    D35

A/D CLK

A/D ŌUT    D1    D9    D10    D11    D23

ŌLATCH CLK

ŌLATCH ŌUT    D8    D9    D10    D32    D33

DK

# FIG.2b

# FIG.3

# FIG.4(a)

# FIG.4(b)

EP 0 357 054 B1

FIG.5(a)

EP 0 357 054 B1

# FIG.5(b)

FIG. 6

| FIG.6a | FIG.6b |

FIG.6a

| | |
|---|---|
| V.TRANSFER CLOCK | $\phi$V1 |
| V.TRANSFER CLOCK | $\phi$V2,$\phi$V4 $\phi$V6 |
| V.TRANSFER CLOCK | $\phi$V3,$\phi$V5 $\phi$V7 |
| V. SYNC. SIGNAL | SH |
| TWO-PHASE CLOCK | $\phi$1A |
| TWO-PHASE CLOCK | $\phi$2A, $\phi$2B |
| (FINAL STAGE TRANSFER CLOCK) | |
| RESET SIGNAL | RS |
| OUTPUT SIGNAL | SiGA |
| BLACK LEVEL DETECTION PULSE | DK |

$D_1$ $D_2$ $D_{12}D_{13}D_{14}$ $D_{36}D_{37}$

LINE SHIFT TIME

IDLE TRANSFER SEC.

DARK OUTPUT SEC.

# FIG.6b

t INT (INTEGRTED TIME )

(G)(B)(R)

D38 D39  D71 D72  S1  S2 S3072 D73 D78 D79  D90 D91 D92  D96

DUMMY
OUTPUT

SIGNAL
OUTPUT

DUMMY OUTPUT

(3072 PIXELS)      (24 PIXELS)

ONE LINE SCANNING TIME (MIN.)

# FIG.7

EP 0 357 054 B1

FIG. 8

| | |
|---|---|
| FIG.8a | FIG.8b |

FIG. 8a

# FIG.8b

# FIG.9

FIG.10

EP 0 357 054 B1

# FIG. 11(a)

# FIG. 11(b)

| DIGITAL INPUT N | ANALOG OUTPUT |
|---|---|
| MSB          LSB<br>1 1 1 1 1 1 1 1 | $+V_{IN}\left(\frac{127}{128}\right)$ |
| 1 0 0 0 0 0 0 1 | $+V_{IN}\left(\frac{1}{128}\right)$ |
| 1 0 0 0 0 0 0 0 | 0 |
| 0 1 1 1 1 1 1 1 | $-V_{IN}\left(\frac{1}{128}\right)$ |
| 0 0 0 0 0 0 0 1 | $-V_{IN}\left(\frac{127}{128}\right)$ |
| 0 0 0 0 0 0 0 0 | $-V_{IN}\left(\frac{128}{128}\right)$ |

FIG.12

FIG.13

# FIG.14(a)

# FIG.14(b)

| DIGITAL INPUT N | ANALOG OUTPUT |
|---|---|
| MSB        LSB<br>1 1 1 1 1 1 1 1 | $+ \dfrac{R_3}{2R} \left(\dfrac{127}{128}\right) V_{IN}$ |
| 1 0 0 0 0 0 0 1 | $+ \dfrac{R_3}{2R} \left(\dfrac{1}{128}\right) V_{IN}$ |
| 1 0 0 0 0 0 0 0 | 0 |
| 0 1 1 1 1 1 1 1 | $- \dfrac{R_3}{2R} \left(\dfrac{1}{128}\right) V_{IN}$ |
| 0 0 0 0 0 0 0 1 | $- \dfrac{R_3}{2R} \left(\dfrac{127}{128}\right) V_{IN}$ |
| 0 0 0 0 0 0 0 0 | $- \dfrac{R_3}{2R} \left(\dfrac{128}{128}\right) V_{IN}$ |